(19) Europäisches Patentamt
European Patent Office
Office européen des brevets

(11) **EP 4 529 050 A1**

(12) **EUROPEAN PATENT APPLICATION**

(43) Date of publication:
**26.03.2025 Bulletin 2025/13**

(21) Application number: **23306562.2**

(22) Date of filing: **20.09.2023**

(51) International Patent Classification (IPC):
*H04B 17/26* (2015.01)   *G01S 5/02* (2010.01)
*H04B 17/373* (2015.01)   *H04B 17/391* (2015.01)

(52) Cooperative Patent Classification (CPC):
**H04B 17/391; G01S 5/0278; H04B 17/26;
H04B 17/373; H04B 17/3913**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicants:
• **Mitsubishi Electric R&D Centre Europe B.V.
1119 NS  Schiphol Rijk Amsterdam (NL)**
Designated Contracting States:
**FR**
• **MITSUBISHI ELECTRIC CORPORATION
Chiyoda-ku
Tokyo 100-8310 (JP)**
Designated Contracting States:
**AL AT BE BG CH CY CZ DE DK EE ES FI GB GR
HR HU IE IS IT LI LT LU LV MC ME MK MT NL NO
PL PT RO RS SE SI SK SM TR**

(72) Inventors:
• **NGUYEN, Viet-Hoa
35708 RENNES CÉDEX 7 (FR)**
• **GRESSET, Nicolas
35708 RENNES CEDEX 7 (FR)**

(74) Representative: **Plasseraud IP
104 Rue de Richelieu
CS92104
75080 Paris Cedex 02 (FR)**

(54) **CHARACTERIZING DYNAMIC RADIO SIGNALS IN A RADIOFREQUENCY ENVIRONMENT**

(57)   A method performed by a computing device for characterizing dynamic radio signals in a radiofrequency environment including:
- a receiving entity, configured to collect the radio signals in the environment,
- a source entity in movement and emitting said radio signals in the environment,
the method comprising:
receiving data related to current measurements of the radio signals collected by the receiving entity,
determining data related to source parameters ($\Phi$) depending on the source entity,
determining data related to environment parameters ($\Psi$) depending on the radiofrequency environment,
determining updated values of the source parameters and of the environment parameters by computing a similarity value between :
-- the data related to the current measurements, and
-- the data related to the source parameters and to the environment parameters,

characterizing the radio signals in the environment based on the updated values of the source parameters and of the environment parameters.

FIG. 1

## Description

## Technical Field

This disclosure pertains to the field of characterizing radio signals having a dynamic propagation in a radiofrequency environment in a wireless communication system and more particularly to monitor such dynamic radio signals in the radiofrequency environment with moving radio sources.

## Background Art

It is considered radio signals propagating in a radiofrequency environment from an emitting entity (or source) to a receiving entity. The properties and propagation conditions of such radio signals notably depend on characteristics of both the emitting and the receiving entities (e.g., their respective positions within the environment, antenna powers, dynamic properties...) as well as on the radiofrequency environment.

In particular, in the context of a wireless communication network serving an environment, radio signals may propagate from diverse sources which may be connected to the network (e.g., user equipment, vehicles, aircrafts) to entities of the network infrastructure, for example base stations, gateways and/or other network entities of the network. Interference signals resulting from such propagation provide knowledge about the quality of the wireless communication network and about the radiofrequency properties of both the network infrastructure and the radio sources. Thus, the characterization of such radio signals within a radiofrequency environment enables to assess and further optimize the radio properties of a wireless communication system and the emitting/receiving entities. For example, based on a monitoring of such radio signals and/or on a knowledge of interferences induced by the propagation of such radio signals in an environment, resource allocation or beamforming within the network architecture may be optimized.

Moreover, in the specific case of moving sources within the radiofrequency environment (e.g., a connected vehicle moving on a road and communicating with a network infrastructure), the propagation of radio signals is dynamic (i.e., changing) as the source of the radio signals moves within the environment. Characterizing such radio signals at the scale of the wireless communication network is thus complex as each receiving entity of the network infrastructure (e.g., a fixed base station) collects time-changing and short-lived signals as the moving source travels in then out of coverage of such receiving entity. Moreover, each receiving entity collects radio signals within a given radiofrequency environment with known layout and physical properties of the environment yet without any knowledge about the emitting entity (such as its position, its trajectory, its velocity etc.). Existing applications for characterizing dynamic radio signals in a radiofrequency environment thus often provide little and/or imprecise knowledge of the radio signals in the case of moving sources.

## Summary

The present disclosure improves the situation.

It is proposed a method performed by a computing device for characterizing dynamic radio signals in a radiofrequency environment, said radiofrequency environment including:

- 　at least one receiving entity, configured to collect the radio signals in the radiofrequency environment,

- 　at least one source entity in movement with respect to the receiving entity, said source entity emitting said radio signals in the radiofrequency environment,

the method comprising:

　　receiving data related to current measurements of the radio signals collected by the at least one receiving entity,

　　determining data related to source parameters, said source parameters depending on the source entity,

　　determining data related to environment parameters, said environment parameters depending on the radiofrequency environment,

　　determining updated values of the source parameters and updated values of the environment parameters by computing a similarity value determined between :

　　　-- the data related to the current measurements, and

-- at least the data related to the source parameters and to the environment parameters,

characterizing the radio signals in the radiofrequency environment based on the updated values of the source parameters and the updated values of the environment parameters.

Advantageously, the proposed disclosure enables to infer radiofrequency features of a dynamic radiofrequency environment based on previous knowledge of such environment. The proposed method advantageously enables to characterize the radio signals within such environment when the source entity emitting such radio signals is in movement within the environment.

In particular, the present disclosure advantageously proposes to distinguish two types of radiofrequency features within the environment: source-specific features via the source parameters and environment-specific features via the environment parameters. The source parameters may be specific to the movement and radio transmission properties of the source entity, while the environment parameters may be specific to the configuration of the network infrastructure within the environment as well as to the radio propagation and reception properties within different zones of such environment. For example, the source parameters may vary when distinct source entities are considered or when a unique source entity moves. The environment parameters may vary depending on the portion (or zone) of the environment having different propagation properties, on the obstacles (e.g., the presence of buildings, trees...) present in the environment which affect the propagation of radio signals. Thus, the proposed disclosure advantageously enables to distinguish different types of parameters having different dynamic (one is moving and one is static) and radio properties, both types of parameters affecting yet the radio signals as received by the receiving entities of the network infrastructure. The characterization of the dynamic radio signals in the radiofrequency environment by distinguishing source parameters from environment parameters advantageously enables to separately exploit the dependency of the propagation properties of radio signals within the environment on each of the source entities and the receiving entities. For example, updated knowledge about the environment (that is, the updated values of the environment parameters) enables to identify constant and/or at least predictable information within the radiofrequency environment. Furthermore, the updated values of environment parameters may enable to better characterize the next moving source entities emitting radio signals at future times.

The present disclosure thus enables to characterize dynamic radio signals in the radiofrequency environment by determining updated and specific information as described, so that such updated and specific information may be exploited and/or reusable for different radio entities. The present disclosure thus saves computing resources of the network infrastructure and provides accurate, updated information about the radiofrequency environment and the propagation of radio signals within such radiofrequency environment, while taking into account the multi-dependency and differentiated dynamic and radio properties contained in such information.

By a radiofrequency environment, it may be understood a portion of a physical environment where a wireless communication network is (at least partially) deployed and enables a wireless communication between entities of the environment, via exchanges of radio signals. Such radiofrequency environment may for example be a traffic area, a road path or an airspace.

By characterizing dynamic radio signals in a radiofrequency environment, it may be understood determining or estimating values of parameters enabling to describe the quality of the radiofrequency communication within the radiofrequency environment. For example, characterizing the dynamic radio signals in the environment may be understood as determining updated information about the propagation properties and differences in the radiofrequency environment, about the dynamic properties of moving entities within the radiofrequency environment, or as determining an evolution of the radiofrequency environment in terms of signaling and radio propagation properties. Characterizing dynamic radio signals may also be understood as monitoring radio signals propagating in the radiofrequency environment.

By dynamic radio signals, also referred to as dynamic radiofrequency signals, it may be understood radiofrequency signals emitted by a source entity and received by a receiving entity in the radiofrequency environment. The radio signals is referred to as dynamic due at least to the movement of the source entity in the radiofrequency environment. The receiving entity may be fixed (i.e., static, unmoving) in the radiofrequency environment. Unless explicitly detailed otherwise, the term radio signal used in the present disclosure refers to a dynamic radio signal. In particular, such radio signals may undergo several phenomena as they propagate in the radiofrequency environment. For example, the radio signals may undergo reflection, refraction, absorption, diffraction in the radiofrequency environment. In another example, the radio signals may interfere with other radio signals and/or with various physical obstacles in the environment (e.g., vehicles, buildings, trees, infrastructures...), thus inducing interferences in the radiofrequency environment. Such radio signals may thus also refer to or include interference signals and characterizing dynamic radio signals may include characterizing dynamic interference signals, as their propagation is affected by various parameters related to both the source entity and the receiving entity. In particular, an emitted radio signal differs from the corresponding received radio signal. The dynamic radio signals in the radiofrequency environment may then be characterized based on at least measurements of such received radio signals by the source entity.

By a source entity, it may be understood a radio entity configured for emitting radio signals. Such radiofrequency signals may for example be control messages, data messages, broadcasted information, sidelink information etc. The source entity may for example be a connected vehicle, a user equipment, a mobile device, an IoT device. In particular, the source entity is considered dynamic (i.e., moving) within the radiofrequency environment. Thus, the received radio signals at receiving entity side vary depending on the position, the trajectory of the source entity as well as on the propagation conditions of the portion of the environment between a location of the receiving entity and a position of the source entity.

By a receiving entity, it may be understood a network entity in the radiofrequency environment configured for collecting radio signals propagating in the environment. The radiofrequency environment may notably include a plurality of receiving entities. Such receiving entity may have a fixed (i.e., unmoving) location in the environment. The receiving entity may for example be a base station managing a coverage zone geographically delimited in the radiofrequency environment. In particular, each receiving entity may collect radio signals within its coverage zone of the radiofrequency environment.

By a computing device, it may be understood a network entity linked to the radiofrequency environment and configured for characterizing the dynamic radio signals in such environment. Such computing device may for example be a core network entity, a network management device, or any other network entity configured for collecting and processing radiofrequency signals. In an embodiment, such computing device may be linked to a plurality of receiving entities from the radiofrequency environment and may be configured to receive data related to the measurements of the radio signals performed by the plurality of receiving entities.

By a similarity value, it may be understood a value reflecting a level of similarity or closeness between different data. In particular, it may be understood a value reflecting a level of similarity between current data, derived from current measurements within the radiofrequency environment, and other data, for example previous, stored, set-up data derived from previous measurements within the radiofrequency environment.

By data related to current measurements of the radio signals, it may be understood any information derived directly or indirectly from measurements collected by one or several receiving entities. For example, such data may be the current measurements of the radio signals collected by the receiving entities. Such data may also include information associated to such current measurements, such as a timestamp, an identifier of the receiving entity collecting such current measurements and/or specific reception conditions of the current measurements.

By data related to source parameters, it may be understood any data derived directly or indirectly from values of one or several source parameters related to the source entity. Such data related to the source parameters are specific to each source entity. Such data related to source parameters may be set, received, computed, determined, measured, inferred and/or estimated by the computing device. By source parameters, it may be understood parameters depending on the source entity emitting radio signals, which affect the characterization of the radio signals. In particular, such source parameters may vary depending on the movement and/or radio capabilities of the source entity.

By determining updated values of the source parameters, it may be understood determining updated information on the source parameters. Such updated values may notably reflect a current (or an up-to-date) situation of the source entity (e.g., an updated trajectory, position, velocity of the source entity) in the radiofrequency environment at a current time when the proposed method is performed.

By data related to environment parameters, it may be understood any data derived directly or indirectly from values of one or several environment parameters related to the radiofrequency environment. Such data related to the environment parameters may be determined, stored, indexed and more generally accessible to the computing device and/or to any network entity of the network infrastructure of the environment. The environment parameters may be understood as parameters enabling to reflect the propagation properties of radio signals within the radiofrequency environment, which affect the characterization of the radio signals. In particular, such environment parameters may at least partially rely on expectable, predictable, constant and/or preconfigured information about the radiofrequency environment.

By determining updated values of the environment parameters, it may be understood determining updated information on the environment parameters. Such updated values may notably reflect a current (or an up-to-date) situation of the radiofrequency environment (e.g., an updated repartition of the signal attenuation in the environment, updated coefficient values of a path loss function) in the radiofrequency environment at a current time when the proposed method is performed.

By computing a similarity value between the data related to the current measurements and at least the data related to the source parameters and to the environment parameters, it may be understood determining a level of similarity of closeness between values reflecting a current, up-to-date situation of the radiofrequency environment and currently exploited values related to the radiofrequency environment. In particular, such similarity value may be obtained by inference, based on current measurements of the radio signals and admitted data. The similarity value may thus be understood as a function depending on values of the source parameters and environment parameters. The updated values of source parameters and environment parameters may then be determined as the values maximizing the level of similarity between the compared data. Equivalently, the similarity value may reflect a gap or a distance between the compared data. In such case, the updated values of source parameters and environment parameters may then be determined as the values minimizing the gap between the compared data.

The following features, can be optionally implemented, separately or in combination one with the others, in the relaying method:

According to an embodiment, the data related to the source parameters and the data related to environment parameters are determined based on at least one element among:

- previous estimated values of the source parameters,

- previous estimated values of the environment parameters,

- values stored in a look-up table,

- values preset by a network entity of the radiofrequency environment,

- a list of candidate values of the source parameters,

- a list of candidate values of the environment parameters.

For example, in the case of successive iterations of the proposed estimation method, the previous estimated values of the source and environment parameters may be understood as values of the source and environment parameters determined at previous iterations of the proposed method.

According to an embodiment, the similarity value further depends on previous data related to previous measurements of the radio signals in the radiofrequency environment. According to such embodiment, such previous data includes at least one element among:

- previous measurements of the radio signals in the radiofrequency environment,

- previous estimated locations of the source entity in the radiofrequency environment,

- data derived from previous values of the source parameters,

- data derived from previous values of the environment parameters.

As a consequence, the proposed method relies on currently exploited data available to the computing device. Such currently exploited data notably relies on previous data directly or indirectly obtained from previous measurements of the radio signals in the radiofrequency environment, at previous times.

The previous measurements of the radio signals may be measurements collected by the receiving entities at previous times and provided to the computing device as or before the proposed method is performed.

The data derived from previous values of the source parameters (respectively, the environment parameters) may be data directly or indirectly obtained from previous values of the source parameters (respectively, the environment parameters). Such data may for example be previous values of the source parameters (respectively, the environment parameters) or current values of the source parameters (respectively, the environment parameters) used and considered as the most up-to-date information about the source parameters (respectively, the environment parameters) when the method is performed. Such data may also be scalar values and/or probability functions determined based on such values of the source parameters. For example, the data derived previous values (or current values) of the source parameters (respectively, the data derived from previous values of the environment parameters) may be expressed as $p(\phi|Z_n\text{-})$ and $p(\psi|Z_n\text{-})$, where $\Phi$ and $\psi$ are the previous (or current) values of the of the source and environment parameters and $Z_n\text{-}$ are previous measurements of radio signals.

According to an embodiment, the source parameters include at least one element among:

- a velocity of the source entity,

- a transmitting power of the source entity, and

- an antenna gain of the source entity.

According to an embodiment, the environment parameters include at least one element among:

- a space-repartition of radiofrequency signal attenuation in the radiofrequency environment,

- coefficients of a modelling function of signal attenuation in the radiofrequency environment,

- coefficients of a path loss function in the radiofrequency environment, and

- shadowing parameters in the radiofrequency environment.

By shadowing parameters, it may be understood parameters characterizing a shadowing path loss model of the radiofrequency environment. For example, the shadowing can be modelled by a gaussian random variable with a standard deviation $\sigma_{SD}$ as $SD_n \sim N(0, \sigma_{SD}^2)$. In such example, the shadowing parameter is $\sigma_{SD}$.

According to an embodiment, the data related to the source parameters, the data related to the environment parameters, the updated values of the source parameters and the updated values of the environment parameters are an element among:

- scalar values, and

- probability functions.

When the updated values are expressed as probability functions, the data derived from the previous values of source parameters and the data derived from the previous values of environment parameters may be expressed as conditional probabilities given data related to previous measurements ($Z_n$-) of the radio signals.

According to an embodiment, the similarity value is derived from at least one element among:

- a likelihood determined by a Bayesian-based algorithm, and

- a distance determined by a Euclidian-based algorithm.

According to an embodiment, the similarity value being derived from a likelihood determined by a Bayesian-based algorithm, the updated values of the source parameters are determined by marginalizing the similarity value over data derived from the previous values of environment parameters and the updated values of the environment parameters are determined by marginalizing the similarity value over data derived from the previous values of source parameters.

According to an embodiment, the marginalization of the similarity value over the data derived from the previous values of environment parameters and over the data derived from the previous values of source parameters are respectively expressed as:

$$\int_{\psi} p(Z_n | Z_{n^-}, \phi, \psi) \times p(\psi | Z_{n^-}) d\psi$$

and

$$\int_{\phi} p(Z_n | Z_{n^-}, \phi, \psi) \times p(\phi | Z_{n^-}) d\phi$$

where:

- $Z_n$ is the data related to the current measurements,
- $Z_n$- is the data related to the previous measurements,
- $\Phi$ are the source parameters,
- $\psi$ are the environment parameters,
- $p(Z_n | Z_n$-$, \phi, \psi)$ is the similarity value,
- $p(\psi | Z_n$-$)$ is the data derived from the previous values of environment parameters ($\psi$), and
- $p(\phi | Z_n$-$)$ is the data derived from the previous values of source parameters ($\Phi$).

According to an embodiment, the updated values of the source parameters and the updated values of the environment parameters are respectively proportional to:

$$p(Z_n|Z_{n^-},\phi) \times p(\phi|Z_{n^-})$$

and

$$p(Z_n|Z_{n^-},\psi) \times p(\psi|Z_{n^-})$$

where:

- $p(Z_n|Z_{n^-},\phi)$ is the similarity value marginalized over the data derived from the previous values of environment parameters,
- $p(Z_n|Z_{n^-},\psi)$ is the similarity value marginalized over the data derived from the previous values of source parameters,
- $p(\phi|Z_{n^-})$ is the data derived from the previous values of source parameters, and
- $p(\psi|Z_{n^-})$ is the data derived from the previous values of environment parameters ($\psi$).

According to an embodiment, the similarity value is expressed as:

$$p(Z_n|Z_{n^-},\phi,\psi) = \int_{s_{1:n}} p(Z_n|Z_{n^-},\phi,\psi,s_{1:n}) \times p(s_{1:n}|Z_{n^-},\phi,\psi)d(s_{1:n})$$

where:

- $p(Z_n|Z_{n^-},\phi,\psi)$ is the similarity value,
- $s_{1:n} = [s_1,s_2,...,s_n]$ is a set of successive positions of the source entity within the environment, with $s_{n^-} = [s_1,s_2,...,s_{n-1}]$ being previous positions of the source entity and $s_n$ being an unknown current position of the source entity,
- $Z_n$ is the data related to the current measurements,
- $Z_{n^-}$ is included in data related to previous measurements of the radio signals,
- $\Phi$ are the source parameters,
- $\psi$ are the environment parameters,
- $p(Z_n|Z_{n^-},\phi,s_{1:n})$ is data related to the similarity value given the set of successive positions of the source entity,
- $p(s_{1:n}|Z_{n^-},\phi,\psi)$ is a position probability of the source entity.

According to such embodiment, the position probability of the source entity is expressed as:

$$p(s_{1:n}|Z_{n^-},\phi,\psi) = p(s_n|s_{n^-},Z_{n^-},\phi,\psi) \times p(s_{n^-}|Z_{n^-},\phi,\psi)$$

with:

$$p(s_n|s_{n^-},Z_{n^-},\phi,\psi) = p(s_n|s_{n-1},v) \propto \exp\left(-\frac{\left(s_n - (s_{n-1} + v \times \Delta t_n)\right)^2}{2\sigma^2}\right)$$

where:

- $p(s_n|s_{n^-},Z_{n^-},\phi,\psi)$ is the probability of a current position of the source entity given the data related to previous measurements of the radio signals,
- $p(s_{n^-}|Z_{n^-},\phi,\psi)$ is included in the data related to previous measurements of the radio signals,
- $v, \Delta t_n, \sigma$ are parameters of a predefined mobility model of the movement of the source entity, said mobility model being expressed as:

$$s_n = s_{n-1} + v * \Delta t_n + w,$$

where:

- $s_n$ is the current position of the source entity,
- $s_{n-1}$ is a previous position of the source entity,

- $v$ is a velocity of the source entity,
- $\Delta t_n$ is a time gap between a current time $t_n$ associated to the current position of the source entity and a previous time $t_{n-1}$ associated to the previous position of the source entity,
- $w$ is a modelling noise following a normal distribution with a null mean and a standard deviation of $\sigma$.

According to an embodiment, the updated values of the source parameters and the updated values of the environment parameters are determined as:

$$\underset{\phi \in \mathcal{P}, \psi \in \mathcal{Q}}{\operatorname{argmin}} d_n^2(\phi, \psi)$$

with the similarity value being expressed as:

$$d_n^2(\phi, \psi) = \sum_{s \in \mathcal{S}} \sum_{k=1}^{K} |Z_{k,n} - (P_t - A - B \times \log_{10}\|s - L_k\|)|^2$$

where:

- $d_n^2(\phi, \psi)$ is the similarity value,
- $\mathcal{P}$ is a set of candidate values of the source parameters,
- $\mathcal{Q}$ is a set of candidate values of the environment parameters,
- $\mathcal{S}$ is a set of candidate positions of the source entity,
- $\phi$ are the source parameters,
- $\psi$ are the environment parameters,
- $s$ is a candidate position value of the source entity among the set of positions S,
- $K$ is the number of receiving entities within the radiofrequency environment,
- $Z_{k,n}$ is the data related to current measurements of the radio signals collected by the $k^{th}$ receiving entity among the K receiving entities,
- $L_k$ is the current position of the $k^{th}$ receiving entity among the K receiving entities,
- $P_t$ is a transmit power of the source entity when emitting the radio signals,
- $A$ and $B$ are path loss parameters of a predefined propagation loss model of the radio signals within the environment, said propagation loss model being expressed as:

$$PL = A + B\log_{10}\|s - L_k\|$$

where PL is the propagation loss value of the transmit power of the radio signals emitted by the source entity.

According to an embodiment, the method further comprises transmitting targeted information to network entities based on the updated values of source parameters and the updated values of environment parameters.

As a consequence, the updated values of source parameters and the updated values of environment parameters may be exploited in order to provide specific targeted information to network entities, such as for distinguishing relevant from obsolete information. For example, based on an updated velocity value of the source entity, the computing device may inform specific receiving entities that the data related to the source parameters may be stored for a given duration and discarded after such duration (e.g., corresponding to a time when the source entity will move out of the coverage zones of such receiving entities). Thus, the updated values of source parameters and the updated values of environment parameters enable to optimize the storage and computing capabilities of the network infrastructure.

According to an embodiment, the method further comprises:

transmitting the updated values of the source parameters to a selected first set of network entities included in the network infrastructure,

transmitting the updated values of the environment parameters to a selected second set of network entities included in the network infrastructure.

According to such embodiment, the first set of network entities and the second set of network entities are selected depending on at least one element among:

- the updated values of the source parameters,

- the updated values of the environment parameters,

- a difference between the updated values and the previous values of the source parameters,

- a difference between the updated values and the previous values of the environment parameters,

- values of the current measurements, and

- positions of the network entities included in the network infrastructure within the radiofrequency environment.

According to another aspect of the disclosure, it is proposed a computer-readable non-transient recording medium on which a software is registered to implement the method when the software is executed by a processor.

According to another aspect of the disclosure, it is proposed a computer device configured for characterizing dynamic radio signals in a radiofrequency environment, said computer device comprising a connection interface to a receiving entity of the radiofrequency environment and processing circuit to implement the proposed method.

According to another aspect of the disclosure, it is proposed a computing device included in a network infrastructure managing a wireless communication network deployed in a radiofrequency environment, said computing device including at least a processing circuit for implementing the proposed method.

**Brief description of the drawings**

**Fig. 1**

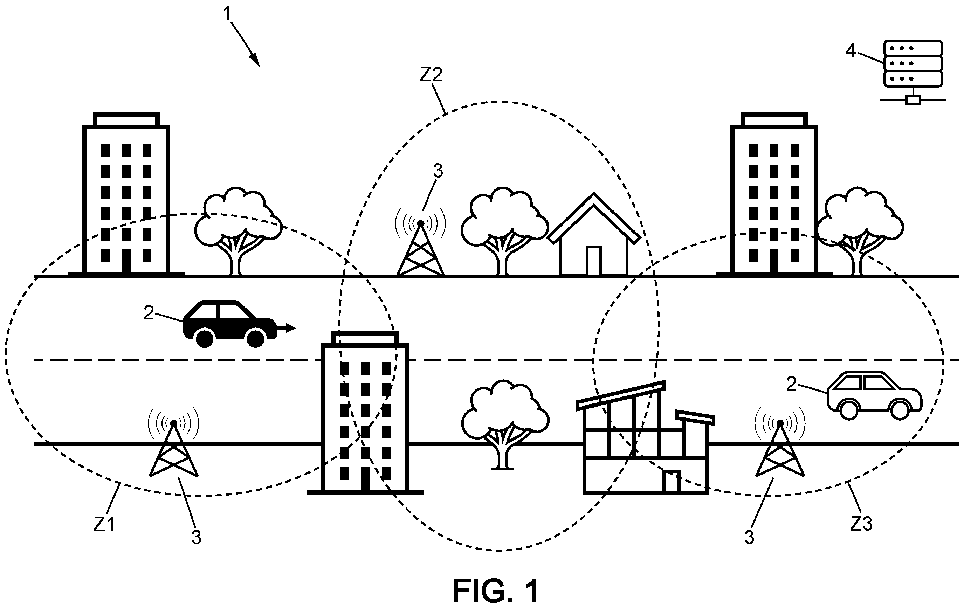

[Fig. 1] is a schematic representation of a radiofrequency environment according to an embodiment.

**Fig. 2**

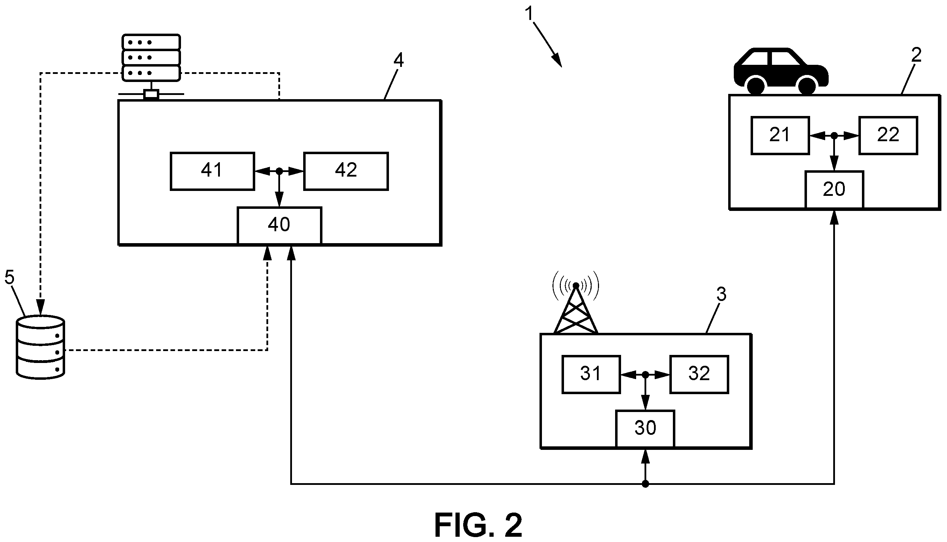

[Fig. 2] is a schematic representation of respective architectures of a receiving entity, a source entity and a computing entity according to an embodiment.

**Fig. 3**

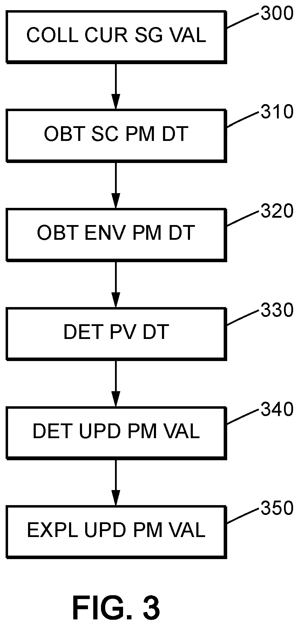

[Fig. 3] is a flowchart showing steps for characterizing dynamic radio signals in a radiofrequency environment according to an embodiment.

**Description of embodiments**

It is now referred to figure 1. Figure 1 illustrates part of a radiofrequency environment 1 according to an embodiment. Such radiofrequency environment 1 may for example be a traffic area, such as a road traffic area of an air traffic area. The radiofrequency environment 1 is covered, at least partially, by a wireless communication network, which enables communication and signaling between different radio devices and radio entities. To that end, the radiofrequency environment 1 may include part of a network infrastructure 3,4 supporting the wireless communication network. Such network infrastructure 3,4 may comprise a plurality of network devices, for example access points, WLAN controllers, base stations, core network entity, network management center etc.. In particular, the network infrastructure 3,4 may include network devices which are configured to manage, observe, measure, collect and/or relay radiofrequency signals emitted by radio devices within the wireless communication network. Such network devices may be referred as receiving entities 3. Such receiving entities 3 may for example be base stations. Such receiving entities 3 may have fixed positions within the radiofrequency environment 1.

Moreover, such receiving entities 3 may be respectively associated to distinct cells, also referred to as coverage zones Z1, Z2, Z3, of the radiofrequency environment 1. Such coverage zones Z1, Z2, Z3 are for example represented on figure 1 as closed dotted lines. In other words, each receiving entity 3 may collect radiofrequency signals, more simply referred to as radio signals, within a delimited geographic area corresponding to a coverage zone Z1, Z2, Z3. The coverage zones Z1, Z2, Z3 may overlap, which is for example the case of coverage zones Z1 and Z2, and coverage zones Z2 and Z3. Such coverage zones Z1, Z2, Z3 may have fixed coverage positions within the radiofrequency environment 1. Such fixed coverage positions of the coverage zones Z1, Z2, Z3 may notably depend on the fixed positions of the receiving entities 3.

The coverage properties and resource management within the radiofrequency environment 1 may be managed by at least one network management device. Such network management device may be part of the network infrastructure and may for example be a core network entity or a network management center. Such network management device may notably be a distant server with respect to the receiving entities 3. In particular, such network management device may have knowledge about the radiofrequency environment 1. Notably, the network management device may have knowledge about the fixed positions of the receiving entities 3 and/or the fixed coverage positions of the coverage zones Z1, Z2, Z3.

The radiofrequency environment 1 may also include radio devices, which are notably configured for emitting radio signals within the radiofrequency environment 1. Such radio signals may for example be data messages and/or control messages transmitted to other radio devices and/or to network devices. Such radio devices may be referred to as source entities 2, as they are the source of the radiofrequency signals collected by the receiving entities 3 in the context of the present disclosure. The source entities 2 may for example be user equipment, connected vehicles, aircrafts and/or IoT devices. In particular, in the context of the present disclosure, the source entity 2 is considered non-static (or dynamic) with respect to the receiving entities 3. For example, as represented on figure 1, the source entity 2 may be a vehicle moving on a road section within the radiofrequency environment 1, so that a location of the source entity 2 varies throughout time, as the source entity 2 moves within the radiofrequency environment 1. In particular, as the source entity 2 moves, the source entity 2 potentially switches between distinct coverage zones Z1, Z2, Z3. For example, referring to figure 1, the moving source entity 2 is in the coverage zone Z1 and will successively pass by the coverage zones Z2 and Z3 as the source entity 2 moves in the direction of the represented arrow. From the perspective of a given receiving entity 3, the receiving entity 3 only collects radio signals emitted by the source entity 2 during a delimited time, while the location of the source entity 2 belongs to the corresponding coverage zone.

In the context of the present disclosure, the radio signals emitted by the source entity 2 propagate via the radiofrequency environment 1 according to physical and radio properties depending on a plurality of factors linked to the source entity 2 emitting the radio signals, the receiving entity 3 collecting such radio signals as well as to the radiofrequency environment 1 where such radio signals propagate. In particular, such signal propagation may change behavior of the radio signals as emitted by the source entity 2 and undergo and/or induce a plurality of phenomena as the radio signals interacts with the radiofrequency environment 1. For example, the radio signals may induce interference effects, thus, the radiofrequency environment 1 may be a radio interference environment 1, where interference effects occur as radio signals are emitted by source entities 2 and collected by receiving entities 3, an emitted radio signal on a source entity's side differing from the corresponding received radio signal on the receiving entity's side. Moreover, such radio interference environment 1 is dynamic since the propagation of radio signals (and thus of interference signals) varies as the source entity 2 moves with respect to the radiofrequency environment 1. In another example, the radio signals may undergo several other wave phenomena such as reflections, refractions, diffraction, absorptions etc. so that the behavior of the radio signals is affected throughout their propagation, all the more so that the source entity 2 moves with respect to the radiofrequency environment 1. A monitoring of such radio signals thus requires to characterize such dynamic radio signals.

An aspect of the present disclosure proposes to characterize radio signals within the radiofrequency environment 1. To that end, it is proposed a computing device 4, as illustrated on figure 2, for performing steps, as detailed on figure 3, for estimating physical and behavioral properties of radio signals propagating in the radiofrequency environment 1 when radio signals are emitted by a moving source entity 2. In a particular aspect of the present disclosure, it is also proposed to characterize interferences within the radiofrequency environment 1, notably when radio signals induce interference effects. Thus, the present disclosure, which applies to radio signals, may also apply to the particular context of interference signals, for characterizing a dynamic interference within the radiofrequency environment 1.

In particular, it is proposed to perform an estimation of the radio signal properties by distinguishing:

- source characteristics $\Phi$, which may be understood as characteristics or factors of radio signal propagation which depend on the source entity 2, and

- environment characteristics $\psi$, which may be understood as characteristics of radio signal propagation which depend on the propagation conditions in the radiofrequency environment 1.

Indeed, radio signal propagation occurring within the radiofrequency environment 1 depend on a plurality of factors. Such factors may notably be source characteristics (or parameters) $\Phi$ relating to the source entity 2. For example, source parameters $\Phi$ may include :

- a velocity of the source entity 2, and/or

- a trajectory of the source entity 2, and/or

- a transmitting power of the source entity 2, and/or

- an antenna gain of the source entity 2.

The propagation of the radio signals within the radiofrequency environment 1 may also depend on environment characteristics (or parameters) $\psi$, relating to the radiofrequency environment 1. For example, environment parameters $\psi$ may include :

- a space-repartition of radiofrequency signal attenuation in the radiofrequency environment 1, and/or

- coefficients of a modelling function of signal attenuation in the radiofrequency environment 1, and/or

- coefficients of a predefined path loss function in the radiofrequency environment 1, and/or

- shadowing parameters in the radiofrequency environment 1.

Thus, the proposed estimation method relies on the fact that the propagation of radio signals depend on a plurality of factors, which have different levels of predictability. Indeed, some parameters, such as the space-repartition of radiofrequency signal attenuation in the radiofrequency environment 1, have slow variations, are repeatable and/or predictable on the network side, while other parameters, such as the velocity or the trajectory of the source entity 2, are unknown on the network side.
As a consequence, radio signals emitted by a moving source entity 2 and received by one or several receiving entities 2 have a dynamic nature, since the source entity 2 is moving. Yet, such radio signals also have a partially predictable nature, since the propagation conditions between the source entity 2 and each receiving entity 3 occur in portions of the radiofrequency environment 1, where physical obstacles (such as trees, buildings etc., as represented on figure 1 for example) and other physical properties affecting the signal propagation are known.
It is now referred to figure 2. Figure 2 represents a schematic architecture of different entities 2, 3, 4, 5 involved in a radiofrequency environment 1 where dynamic radio signals propagate and that the present estimation method proposes to characterize. Such entities may notably include a computing device 4, one or several receiving entities 3, one or several source entities 2, one or several distant servers 5.
A computing device 4 is proposed for performing the estimation method, which will be further detailed while describing figure 3. The computing device 4 may notably be network device included in the network infrastructure supporting the wireless communication network deployed in the radiofrequency environment 1. For example, the computing device 4 may be a network management device supervising the network deployment in the radiofrequency environment 1 or in part of it. The computing device 4 may be a distant server with respect to the radiofrequency environment 1. The computing device 4 may also be a core network entity of the wireless communication network. The computing device 4 may be configured to manage the network resources for providing connectivity in the radiofrequency environment 1. The computing device 4 may also be configured for providing system information to network devices (e.g., to receiving entities 3) and to other devices in the radiofrequency environment 1 (such as user devices, to source entities 2). The computing device 4 is configured to perform at least the estimation method for characterizing radio signals propagating within the radiofrequency environment 1. To that end, such computing device 4 may include a processing circuit for performing at least the estimation method. Such processing circuit may notably relies on a processing unit 41 and a memory unit 42. The computing device 4 may also receive and/or emit signals and data messages with other network entities and/or other devices. For example, the computing device 4 may receive data related to collected radio signals from the receiving entities 3. The computing device 4 may also retrieve data stored in databases from one or several distant servers 5. The computing device 4 may also transmit (e.g., via broadcast) information to other devices such as receiving entities 3 and/or source entities 2. To that end, the computing device 4 may also include a communication interface 40.
The receiving entity 3 is configured for at least collecting radio signals emitted by one or several source entities 2. Such receiving entity 3 may for example by a base station. In particular, each receiving entity 3 is configured for collecting radio signals propagating within the corresponding coverage zone Z1, Z2, Z3 managed by said receiving entity 3. For example, referring to figure 1, the receiving entity 3 on the left part of figure 1 and managing the coverage zone Z1 may collect radio signals emitted by the source entity 2 corresponding to the black-filled vehicle. If such source entity 2 moves in the direction of the represented arrow and enters the coverage zone Z2 (respectively Z3), the receiving entity 3 on the middle part (respectively, on the right part) of figure 1 and managing the coverage zone Z2 (respectively Z3) may collect the radio signals emitted by such source entity 2. In another example, in reference to figure 1, the receiving entity 3 on the right part of figure 1 managing the coverage zone Z3 may collect radio signals emitted by the source entity 2 corresponding to the white-filled vehicle. To that end, each receiving entity 3 may include a communication interface 30. Such communication interface 30 may include means for radiofrequency communication (e.g., receiving antennas). Moreover, each receiving entity 3 may also be configured for determining information for transmission to other devices in the radiofrequency environment 1, such as the source entities 2, other receiving entities 3 and/or the computing device 4 for example. To that end, each receiving entity 3 may include a processing unit 31 and a memory unit 32.

The source entity 2 is configured for at least emitting radio signals in the radiofrequency environment 1. Such emitted radio signals may for example be data messages emitted to entities of the network infrastructure (for example, in the context of V2N communication), to other source entities (for example, in the context of V2V communication between vehicles), or more generally to any other device (for example, in the context of V2X communication). To that end, each source entity 2 may include a processing unit 21, a memory unit 22 and a communication interface 20 including means for radiofrequency communication (e.g., emission antennas).

The distant servers 5 may be configured to store databases related to the wireless communication network. Such databases may notably be wirelessly accessed by devices such as network entities (e.g., the computing device 4, the receiving entities 3).

It is now referred to figure 3. Figure 3 details steps of a proposed method for estimating properties of dynamic radio signals propagating within a radiofrequency environment, as represented on figure 1. Such steps may be performed by the computing device 4, as it will describe below. However, alternatively, such method may be performed by another network entity having data gathering and processing capabilities. For the sake of clarity, only one source entity 2 is considered as a source of emission of radio signals. However, such method may be generalized to a plurality of source entities 2. The method is considered to be performed at a current time $t_n$, associated to a current situation within the radiofrequency environment 1 (e.g., the computing device 4 has access to current available information, the source entity 2 has a current unknown location $s_n$ in the environment 1). The method may be performed as a first iteration or following previous iterations at previous times $t_1, t_2..., t_{n-1}$.

In particular, two distinct embodiments of the estimation method are proposed. In a preferred first embodiment, the estimation method may be performed based on a Bayesian method. In a second embodiment, the estimation method may be performed based on a Euclidian method. The following description of steps of the estimation method will detail both embodiments.

At a step 300, data related to radio signals emitted in the radiofrequency environment 1 are collected. Such data may be current measurements of radio signals performed by the receiving entities 3 in respective coverage zones Z1, Z2, Z3 of the environment 1. In an embodiment, such data may be interference signals measured by the receiving entities 3 from radio signals emitted by a given source entity 2.

In particular, at step 300, the computing device 4 may centralize data related current measurements of the radio signals collected by a plurality of receiving entities 3 in respective delimited coverage zones Z1, Z2, Z3. Such data is thus measured by the receiving entities 3 and transmitted to the computing device 4. Such data related to the current measurements of radio signals may also include data associated to conditions of measurements of such radio signals, such as a timestamp, conditions of reception of such radio signals by the receiving entities 3, identifiers, positions of and/or any other information about the receiving entities 3.

Thus, at step 300, the computing device 4 obtains data related to current measurements of the radio signals currently occurring in the radiofrequency environment 1. The computing device 4 may also obtain data related to conditions of measurements of such radio signals by the receiving entities 3 (such as the receiving entity (or entities) 3 measuring such radio signals, the time when such radio signals are measured, the radio conditions of such radio signals (e.g., a received transmission power of the radio signals). The computing device 4 may also receive any other data determined or estimated by the receiving entities based on such received radio signals and enabling to characterize the current radio signals, their propagation and/or the source entities 2 emitting such radio signals.

In an embodiment, such data related to current measurements of the radio signals may be collected by the computing device 4 on the fly, that is, such measurements are received by the receiving entities 3 and transmitted on the fly to the computing device 4. In another embodiment, such measurements may be transmitted by the receiving entities 3 at predefined time windows, so that the computing device 4 receives data from the receiving entities 3 by batches at predefined times. For example, such predefined time windows may be preconfigured within the network infrastructure, so that the receiving entities 3 are configured to potentially store data related to the received radio signals and to transmit their measurements and related data at such predefined time windows. The expression "current measurements" may thus be understood as either measurements collected on almost real time in the radiofrequency environment 1, or as the most updated measurements collected in the environment 1 with respect to predefined time windows (or to a predefined periodicity).

At the stage of step 300, the computing device 4 may also obtain data related to previous measurements of the radio signals, that is, measurements performed at times previous to the current time $t_n$. Such previous measurements may be transmitted by the receiving entities 3 to the computing device 4 at step 300 or at previous times $t_1, t_2,..., t_{n-1}$ preceding current time $t_n$ when step 300 occurs.

At an optional step following step 300 (not represented on figure 3), a data cleaning may be performed on the collected data related to the current measurements of the radio signals. At such optional data cleaning step, data received at step 300 may also be filtered based on predefined geographic and/or temporal criteria. For example, measurements collected with a timestamp exceeding a predefined time interval may be discarded, since such measurements may be considered obsolete. In another example, if the estimation method is performed for a delimited geographic area of the radiofrequency environment 1, the measurements collected by receiving entities 3 having a fixed position outside such delimited geographic area may be discarded.

At a step 310, data related to source parameters $\Phi$ are determined. The source parameters $\Phi$ may for example be the velocity v of the source entity 2, the transmitter power of the source entity 2 and/or an antenna gain of the source entity 2.

Such data related to source parameters $\Phi$ may be values of the source parameters $\Phi$. Such values of the source parameters $\Phi$ may be or depend on values outputted at a previous iteration of the proposed estimation method. Such values of the source parameters $\Phi$ may also be determined based on data retrieved from databases, for example stored in distant servers 5. In such case, the data related to source parameters $\Phi$ may be selected by the computing device 4 within the databases, depending on the radiofrequency environment 1 to characterize. For instance, if the considered portion of environment 1 is a road in a rural area or a highway, data related to a source parameter $\Phi$ corresponding to the velocity of the source entity 2 may be values of velocity ranging between 70 kilometers per hour (km/h) and 130 km/h. The values of the source parameters $\Phi$ may also be set by the computing device 4, for example as initialized values of the source parameters $\Phi$.

In a first embodiment of the disclosure, the data related to the source parameters $\Phi$ may be expressed as probability functions. For example, such data related to the source parameters $\Phi$ may be expressed as:

$$p(\phi|Z_{n^-})$$

where:

- $\Phi$ is the set of source parameters,

- $Z_n^-$ is data related to previous measurements of the radio signals collected by the computing device 4.

In a second embodiment of the disclosure, the data related to the source parameters $\Phi$ may be expressed as scalar values. In such second embodiment, the data related to the source parameters $\Phi$ may be a list of discrete candidate values of the source parameters $\Phi$. In particular, such discrete candidate values may be listed based on previous values of the source parameters $\Phi$ (for example, as outputted by the estimation method at a previous iteration). For instance, if a previous value of the transmitter power of the source entity 2 is 10 kilowatts (kW), the list of candidate values of the source parameters $\Phi$ may be a finite number of values (e.g., a hundred) around 10 kW, for example [9; 9,05; 9,1; ... ; 10,9; 10,95; 11].

At a step 320, data related to environment parameters $\psi$ are determined. The environment parameters $\psi$ may for example include parameters of a propagation loss model in the radiofrequency environment 1, such as a set of space-repartition values of a radiofrequency signal attenuation in the radiofrequency environment 1, coefficients of a modelling function of signal attenuation in the radiofrequency environment 1, coefficients of a path loss function in the radiofrequency environment 1 and/or shadowing parameters in the radiofrequency environment 1.

For example, the propagation loss model may be modelized by a signal attenuation map of the environment 1, such signal attenuation map being known by the network infrastructure and notably by the computing device 4. For instance, the propagation loss model may take the form of a look-up table (or LUT) that maps the propagation loss, depending on a location of the source entity 2. In another example, the propagation loss model may take the form of a path loss function of radio signals propagating from a source entity 2 to a given receiving entity 3, which may for example be expressed as:

$$A + B \times log_{10}(d_{2-3})$$

where:

- A, B are the coefficients of the path loss function,
- $d_{2-3}$ is a distance between the source entity 2 and the receiving entity 3.

The coefficients A, B of the path loss function may thus be included in the set of environment parameters $\Psi$.

Similarly to the source parameters $\Phi$, data related to environment parameters $\psi$ may be values of the environment parameters $\psi$. Such values of environment parameters $\psi$ may be or depend on values outputted at a previous iteration of the proposed estimation method. Such values of the environment parameters $\psi$ may also be

determined based on data retrieved from databases, for example stored in distant servers 5. In such case, the data related to environment parameters $\psi$ may be selected by the computing device 4 within the databases, depending on the radiofrequency environment 1 wherein radio signals to be characterized propagate. For instance, if the considered portion of environment 1 includes many buildings and other physical obstacles, the signal attenuation values (expressed in decibels or dB) may be more important with respect to clearer areas of the radiofrequency environment 1. The values of the source parameters $\Phi$ may also be set by the computing device 4, for example as initialized values of the source parameters $\Phi$. For example, the signal attenuation may be set to vary from 50 dB to 100 dB.

In a first embodiment of the disclosure, the data related to the environment parameters $\psi$ may be expressed as probability functions. For example, such data related to the source parameters $\Phi$ may be expressed as:

$$p(\Psi | Z_n{}^-)$$

where:

- $\psi$ is the set of environment parameters,
- $Z_n{}^-$ is data related to previous measurements of the radio signals collected by the computing device 4.

In a second embodiment of the disclosure, the data related to the environment parameters $\psi$ may be expressed as scalar values. In such second embodiment, the data related to the environment parameters $\psi$ may be a list of discrete candidate values of the environment parameters $\psi$. In particular, such discrete candidate values may be listed based on previous values of the environment parameters $\psi$ (for example, as outputted by the estimation method at a previous iteration).

At a step 330, previous data are determined and/or obtained by the computing device 4.

The previous data determined at step 330 may for example include previous estimated locations $s_1, s_2,..., s_{n-1}$ of the source entity 2, before the current time $t_n$. The location s of the source entity 2 being a priori unknown by the network infrastructure, such location s is a latent parameter which successive values are estimated by the network infrastructure. Such previous estimated locations of the source entity 2 may for example be estimated by the receiving entities 3, the computing device 4 or any other network entity based on the collected measurements of radio signals. Such previous estimated locations of the source entity 2 may also be retrieved from databases based on a look-up table or set by the computing device 4, for example when no previous measurements of the radio signals are available.

The previous data determined at step 330 may also include previous measurements of the radio signals $Z_n{}^-$, associated to previous times $t_1, t_2..., t_{n-1}$ before the current time $t_n$. Such previous measurements of the radio signals $Z_n{}^-$ may for example be received by the computing device 4 from the receiving entities 3 at previous times $t_1, t_2..., t_{n-1}$, typically at previous iterations of the proposed estimation method. Such previous estimated locations of the source entity 2 may also be retrieved from databases based on a look-up table or set by the computing device 4, for example when no previous measurements of the radio signals are available.

At step 330, based on the previous data available for the computing device 4, the computing device 4 may also determine estimated values of the source parameters $\Phi$ and of the environment parameters $\psi$ based on such previous data. Such estimated values of the source parameters $\Phi$ and of the environment parameters $\psi$ based on such previous data may for example take the form of probability functions, such as $p(\psi | Z_n-)$ and $p(\phi | Z_n-)$.

At a step 340, updated values of source parameters $\Phi$ and updated values of environment parameters $\psi$ are determined.

To that end, a similarity value computed at a current time $t_n$ is determined at step 340 between:

- the data related to the current measurements of the radio signals collected at step 300, and

- at least the data related to the source parameters $\Phi$ and to the environment parameters $\psi$.

In a first embodiment of the disclosure, the similarity value may be computed as a value comparing the data related to the current measurements of the radio signals $Z_n$ with available data obtained, collected, measured, determined and/or estimated by the computing device 4. Such available data may notably include:

- the data related to the source parameters $\Phi$,

- the data related to the environment parameters $\psi$,

- data related to previous measurements of the radio signals $Z_n-$ in the radiofrequency environment 1, such previous measurements being for example collected by the receiving entities 3 at times previous to the current time $t_n$,

- data related to previous estimations within the radiofrequency environment 1, notably for latent parameters, such as the location of the source entity 2. Such data may for example include previous estimated locations $s_1, s_2,..., s_{n-1}$ of the source entity 2 associated to previous times $t_1, t_2..., t_{n-1}$.

According to the first embodiment of the disclosure, the similarity value may be expressed as:

$$p(Z_n|Z_{n^-},\phi,\psi) = \int_{s_{1:n}} p(Z_n|Z_{n^-},\phi,\psi,s_{1:n}) \times p(s_{1:n}|Z_{n^-},\phi,\psi)d(s_{1:n})$$

where:

- $p(Z_n|Z_{n^-},\phi,\psi)$ is the similarity value,
- $s_{1:n} = [s_1,s_2,...,s_n]$ is a set of successive locations of the source entity 2 within the environment 1, with $s_{n^-} = [s_1,s_2,..., s_{n-1}]$ being previous locations of the source entity 2 and $s_n$ being an unknown current location of the source entity 2,
- $Z_n$ is the data related to the current measurements collected at step 300,
- $Z_{n^-}$ is the data related to previous measurements of the radio signals,
- $\Phi$ are the source parameters,
- $\psi$ are the environment parameters,
- $p(Z_n|Z_{n^-},\phi,\psi,s_{1:n})$ is a likelihood value reflecting a similarity of the data related to the current measurements with respect to the previous measurements $Z_{n^-}$, the source parameters $\Phi$, the environment parameters $\psi$ and the set of successive locations of the source entity 2,
- $p(s_{1:n}|Z_{n^-},\phi,\psi)$ is a position probability of the source entity 2 based on the previous measurements $Z_{n^-}$, the source parameters $\Phi$, the environment parameters $\psi$.

The expression of the position probability of the source entity 2 $p(s_{1:n}|Z_{n^-},\phi,\psi)$ may be interpreted as a prediction of the current location of the source entity 2, estimated based on the data available to the computing device 4 (and more generally, to the network infrastructure side), that is the data related to previous measurements of the radio signals $Z_{n^-}$, the data related to the source parameters $\Phi$ and the data related to the environment parameters $\psi$.

Such position probability of the source entity 2 $p(s_{1:n}|Z_{n^-},\phi,\psi)$ may notably be expressed as:

$$p(s_{1:n}|Z_{n^-},\phi,\psi) = p(s_n|s_{n^-},Z_{n^-},\phi,\psi) \times p(s_{n^-}|Z_{n^-},\phi,\psi)$$

with:

$$p(s_n|s_{n^-},Z_{n^-},\phi,\psi) = p(s_n|s_{n-1},v) \propto \exp\left(-\frac{\left(s_n - (s_{n-1} + v \times \Delta t_n)\right)^2}{2\sigma^2}\right)$$

where:

- $p(s_n|s_{n^-},Z_{n^-},\phi,\psi)$ is the probability of the current location of the source entity 2 given the available data,
- $p(s_{n^-}|Z_{n^-},\phi,\psi)$ is included in the data related to previous measurements of the radio signals,
- $v, \Delta t_n, \sigma$ are parameters of a predefined mobility model of the movement of the source entity, said mobility model being expressed as:

$$s_n = s_{n-1} + v * \Delta t_n + w,$$

and where:

- $s_n$ is the current location of the source entity 2,
- $s_{n-1}$ is a previous location of the source entity 2,
- $v$ is a velocity of the source entity 2,
- $\Delta t_n$ is a time gap between a current time $t_n$ associated to the current location of the source entity 2 and a previous time $t_{n-1}$ associated to the previous location of the source entity 2,

- *w* is a modelling noise following a normal distribution with a null mean and a standard deviation of $\sigma$.

In the present example, a gaussian noise is considered for the mobility model of the source entity 2. Alternatively, other predefined mobility models of the movement of the source entity 2 may be considered and in such case, the proportionality of the expression $p(s_n|s_{n^-}, Z_{n^-}, \phi, \psi)$ may differ.

Based on such expression of the similarity value $p(Z_n|Z_{n^-}, \phi, \psi)$, step 340 includes a substep of marginalizing the similarity value, as following:

$$p(Z_n|Z_{n^-}, \phi) = \int_\psi p(Z_n|Z_{n^-}, \phi, \psi) \times p(\psi|Z_{n^-}) d\psi$$

and

$$p(Z_n|Z_{n^-}, \psi) = \int_\phi p(Z_n|Z_{n^-}, \phi, \psi) \times p(\phi|Z_{n^-}) d\phi$$

where:

- $Z_n$ is the data related to the current measurements,
- $Z_{n^-}$ is the data related to the previous measurements,
- $\Phi$ are the source parameters,
- $\psi$ are the environment parameters,
- $p(Z_n|Z_{n^-}, \phi, \psi)$ is the similarity value,
- $p(\psi|Z_{n^-})$ and $p(\phi|Z_{n^-})$ are data included in previous estimations within the radiofrequency environment 1.

After such marginalizing step, the updated values of the source parameters $\Phi$ and the updated values of the environment parameters $\psi$ may be respectively determined as:

$$p(\phi|Z_{1:n}) \propto p(Z_n|Z_{n^-}, \phi) \times p(\phi|Z_{n^-})$$

and

$$p(\psi|Z_{1:n}) \propto p(Z_n|Z_{n^-}, \psi) \times p(\psi|Z_{n^-})$$

In a second embodiment of the disclosure, updated values of source parameters $\Phi$ and of environment parameters $\psi$ are determined by computing a similarity value relating to a Euclidian distance between the data related to current measurements of the radio signals collected at step 300 and the discrete candidate values of the source parameters $\Phi$ and of the environment parameters $\psi$.

More specifically, in the second embodiment of the disclosure, the similarity value may be computed, according to a Euclidian method, as:

$$d_n^2(\phi, \psi) = \sum_{s \in \mathcal{S}} \sum_{k=1}^{K} |Z_{k,n} - (P_t - A - B \times \log_{10}||s - L_k||)|^2$$

where:

- $d_n^2(\phi, \psi)$ is the similarity value according to the second embodiment,
- $\mathcal{P}$ is the list of discrete candidate values of the source parameters $\Phi$,
- $\mathcal{Q}$ is the list of discrete candidate values of the environment parameters $\psi$,
- $\mathcal{S}$ is a set of locations of the source entity 2,
- $\phi$ is the set of source parameters,
- $\psi$ is the set of environment parameters,

- $s$ is a location value of the source entity 2 among the set of locations $\mathcal{S}$ ,
- $K$ is the number of receiving entities 3 considered by the computing device 4,
- $Z_{k,n}$ is the data related to current measurements of the radio signals collected by the $k^{th}$ receiving entity 3 among the K receiving entities 3,
- $L_k$ is the current position of the $k^{th}$ receiving entity among the K receiving entities,
- $P_t$ is a transmit power of the radio signals emitted by the source entity 2,
- $A$ and $B$ are coefficients of the predefined path loss function of radio signals propagating from the source entity 2 to the given $k^{th}$ receiving entity 3.

The updated values of source parameters $\Phi$ and of environment parameters $\psi$ may then be determined as the candidate values of source parameters $\Phi$ and of environment parameters $\psi$ that minimize such distance-related similarity value. In other words, the updated values of source parameters $\Phi$ and of environment parameters $\psi$ may be determined as:

$$\underset{\phi\in\mathcal{P},\psi\in\mathcal{Q}}{\operatorname{argmin}} d_n^2(\phi,\psi)$$

At an optional step 350, the updated values of the source parameters $\Phi$ and of the environment parameters $\psi$ determined at step 340 may be exploited by the network infrastructure. In particular, such exploitation may take advantage of the distinction between source parameters and environment parameters.

For example, after determining the updated values of the source parameters $\Phi$ and of the environment parameters $\psi$, the computing device 4 may transmit (e.g., via broadcast, groupcast or unicast) part of such updated values (notably along with other information) to different network entities of the network architecture supporting the wireless communication network deployed in the radiofrequency environment 1. Such updated values may be part of assistance information provided to the network entities and notably to the core network for better management of the radio resources or for optimizing the radio architecture of the network (e.g., beamforming, link adaptation etc.) for example.

In an example, such updated values may be used for deciding the time during which each characteristic collected and/or determined by a given receiving entity 3 may be stored and used by such receiving entity 3. For example, if the estimation method provides a value of an environment parameter $\psi$ with a pathloss exponent and an updated velocity value of the source parameter $\Phi$ of 10 meters per second, and supposing that the receiving entity 3 covers a 2000-meter-zone, such receiving entity 3 may keep the source parameters for 200 seconds. Yet, if the estimation method detects a source entity 2 with an almost null speed, the source parameters $\Phi$ related to such source entity 2 may be kept for a longer time. In other words, the updated values of the source parameters $\Phi$ and of the environment parameters $\psi$ may be exploited at step 350 in order to distinguish relevant from obsolete data for the different network entities. Such information may for example be transmitted by the computing device 4 to the different network entities, via a timer, Boolean information, or a list of selected parameters which values are to be kept or discarded for instance.

The updated values of the source parameters $\Phi$ and of the environment parameters $\psi$ may also be advantageously exploited, in order to provide targeted information to the different network entities. For example, updated values of the source parameters $\Phi$ may be shared to receiving entities 3 managing the coverage zones on the estimated trajectory path of the source entity 2 (and that will thus receive radio signals from such source entity 2 at future times). Such updated values of the source parameters $\Phi$ may enable the network infrastructure to characterize the radio signals emitted by such source entity 2 without processing all measurements at each received batch of radio signals. In another example, updated values of the environment parameters $\psi$ may be shared to receiving entities 3 managing the considered portion of radiofrequency environment 1 and enable to characterize the dynamic radio signals within such portion even when such radio signals are generated by other source entities 2, since the environment parameters $\psi$ are not source-dependent.

The proposed method thus enables the overall network infrastructure to save processing resources and time for characterizing the radio signals, to monitor the propagation of radio signals, to optimize the data storage of network entities while enabling to optimize the radio knowledge within the radiofrequency environment 1.

**List of references**

- 1: radiofrequency environment
- 2: source entity
- 3: receiving entity
- 4: computing device
- Z1, Z2, Z3: coverage zones

- 20, 30, 40: communication interface
- 21, 31, 41: processing unit
- 22, 32, 42 : memory unit

**Claims**

1. A method performed by a computing device (4) for characterizing dynamic radio signals in a radiofrequency environment (1), said radiofrequency environment (1) including:

     - at least one receiving entity (3), configured to collect the radio signals in the radiofrequency environment (1),
     - at least one source entity (2) in movement with respect to the receiving entity (3), said source entity (2) emitting said radio signals in the radiofrequency environment (1),

   the method comprising:

     receiving (300) data related to current measurements of the radio signals collected by the at least one receiving entity (3),
     determining (310) data related to source parameters ($\Phi$), said source parameters ($\Phi$) depending on the source entity (2),
     determining (320) data related to environment parameters ($\psi$), said environment parameters depending on the radiofrequency environment (1),
     determining (340) updated values of the source parameters ($\Phi$) and updated values of the environment parameters ($\psi$) by computing a similarity value determined between :

         -- the data related to the current measurements, and
         -- at least the data related to the source parameters ($\Phi$) and to the environment parameters ($\psi$),

     characterizing the radio signals in the radiofrequency environment (1) based on the updated values of the source parameters ($\Phi$) and the updated values of the environment parameters ($\psi$).

2. The method according to claim 1, wherein the data related to the source parameters ($\Phi$) and the data related to environment parameters ($\psi$) are determined based on at least one element among:

     - previous estimated values of the source parameters ($\Phi$),
     - previous estimated values of the environment parameters ($\psi$),
     - values stored in a look-up table,
     - values preset by a network entity of the radiofrequency environment (1),
     - a list of candidate values ( $\mathcal{P}$ ) of the source parameters ($\Phi$),
     - a list of candidate values ( $\mathcal{Q}$ ) of the environment parameters ($\psi$).

3. The method according to any one of the preceding claims, wherein the similarity value further depends on previous data related to previous measurements of the radio signals in the radiofrequency environment (1).

4. The method according to claim 3, wherein said previous data includes at least one element among:

     - previous measurements of the radio signals ($Z_n^-$) in the radiofrequency environment (1),
     - previous estimated locations ($s_1,.., s_{n-1}$) of the source entity (2) in the radiofrequency environment (1),
     - data derived from previous values of the source parameters ($\Phi$),
     - data derived from previous values of the environment parameters ($\psi$).

5. The method according to any one of the precedent claims, wherein the source parameters ($\Phi$) include at least one element among:

     - a velocity of the source entity (2),
     - a transmitting power of the source entity (2), and
     - an antenna gain of the source entity (2).

6. The method according to any one of the precedent claims, wherein the environment parameters include at least one element among:

   - a space-repartition of radiofrequency signal attenuation in the radiofrequency environment (1),
   - coefficients of a modelling function of signal attenuation in the radiofrequency environment (1),
   - coefficients of a path loss function in the radiofrequency environment (1), and
   - shadowing parameters in the radiofrequency environment (1).

7. The method according to any one of the precedent claims, wherein the data related to the source parameters ($\Phi$), the data related to the environment parameters ($\psi$), the updated values of the source parameters ($\Phi$) and the updated values of the environment parameters ($\psi$) are elements among:

   - scalar values, and
   - probability functions.

8. The method according to any one of the precedent claims, wherein said similarity value is derived from at least one element among:

   - a likelihood determined by a Bayesian-based algorithm, and
   - a distance determined by a Euclidian-based algorithm.

9. The method according to any one of the precedent claims, the similarity value being derived from a likelihood determined by a Bayesian-based algorithm, and wherein the updated values of the source parameters ($\Phi$) are determined by marginalizing the similarity value over data derived from the previous values of environment parameters ($\psi$) and the updated values of the environment parameters ($\psi$) are determined by marginalizing the similarity value over data derived from the previous values of source parameters ($\Phi$).

10. The method according to claim 9, wherein the marginalization of the similarity value over the data derived from the previous values of environment parameters ($\psi$) and over the data derived from the previous values of source parameters ($\Phi$) are respectively expressed as:

$$\int_{\psi} p(Z_n|Z_{n^-},\phi,\psi) \times p(\psi|Z_{n^-})d\psi$$

and

$$\int_{\phi} p(Z_n|Z_{n^-},\phi,\psi) \times p(\phi|Z_{n^-})d\phi$$

where:

   - $Z_n$ is the data related to the current measurements,
   - $Z_{n^-}$ is the data related to the previous measurements,
   - $\Phi$ are the source parameters,
   - $\psi$ are the environment parameters,
   - $p(Z_n|Z_{n^-},\phi,\psi)$ is the similarity value,
   - $p(\psi|Z_{n^-})$ is the data derived from the previous values of environment parameters ($\psi$), and
   - $p(\phi|Z_{n^-})$ is the data derived from the previous values of source parameters ($\Phi$).

11. The method according to claim 10, wherein the updated values of the source parameters ($\Phi$) and the updated values of the environment parameters ($\psi$) are respectively proportional to:

$$p(Z_n|Z_{n^-},\phi) \times p(\phi|Z_{n^-})$$

and

$$p(Z_n|Z_{n^-},\psi) \times p(\psi|Z_{n^-})$$

where:

- $p(Z_n|Z_{n^-},\phi)$ is the similarity value marginalized over the data derived from the previous values of environment parameters ($\psi$),
- $p(Z_n|Z_{n^-},\psi)$ is the similarity value marginalized over the data derived from the previous values of source parameters ($\Phi$),
- $p(\phi|Z_{n^-})$ is the data derived from the previous values of source parameters ($\Phi$), and
- $p(\psi|Z_{n^-})$ is the data derived from the previous values of environment parameters ($\psi$).

**12.** The method according to any one of the precedent claims, wherein the similarity value is expressed as:

$$p(Z_n|Z_{n^-},\phi,\psi) = \int_{s_{1:n}} p(Z_n|Z_{n^-},\phi,\psi,s_{1:n}) \times p(s_{1:n}|Z_{n^-},\phi,\psi)d(s_{1:n})$$

where:

- $p(Z_n|Z_{n^-},\phi,\psi)$ is the similarity value,
- $s_{1:n} = [s_1,s_2,...,s_n]$ is a set of successive positions of the source entity (2) within the environment, with $s_{n^-} = [s_1, s_2,...,s_{n-1}]$ being previous positions of the source entity (2) and $s_n$ being an unknown current position of the source entity (2),
- $Z_n$ is the data related to the current measurements,
- $Z_{n^-}$ is included in data related to previous measurements of the radio signals,
- $\Phi$ are the source parameters,
- $\psi$ are the environment parameters,
- $p(Z_n|Z_{n^-},\psi,s_{1:n})$ is data related to the similarity value given the set of successive positions of the source entity (2),
- $p(s_{1:n}|Z_{n^-},\phi,\psi)$ is a position probability of the source entity (2).

**13.** The method according to claim 12, wherein the position probability of the source entity (2) is expressed as:

$$p(s_{1:n}|Z_{n^-},\phi,\psi) = p(s_n|s_{n^-},Z_{n^-},\phi,\psi) \times p(s_{n^-}|Z_{n^-},\phi,\psi)$$

with:

$$p(s_n|s_{n^-},Z_{n^-},\phi,\psi) = p(s_n|s_{n-1},v) \propto \exp\left(-\frac{\left(s_n - (s_{n-1} + v \times \Delta t_n)\right)^2}{2\sigma^2}\right)$$

where:

- $p(s_n|s_{n^-},Z_{n^-},\phi,\psi)$ is the probability of a current position of the source entity (2) given the data related to previous measurements of the radio signals,
- $p(s_{n^-}|Z_{n^-},\phi,\psi)$ is included in the data related to previous measurements of the radio signals,
- $v, \Delta t_n, \sigma$ are parameters of a predefined mobility model of the movement of the source entity (2), said mobility model being expressed as:

$$s_n = s_{n-1} + v * \Delta t_n + w,$$

where:

- $s_n$ is the current position of the source entity (2),
- $s_{n-1}$ is a previous position of the source entity (2),

- $v$ is a velocity of the source entity (2),
- $\Delta t_n$ is a time gap between a current time $t_n$ associated to the current position of the source entity (2) and a previous time $t_{n-1}$ associated to the previous position of the source entity (2),
- $w$ is a modelling noise following a normal distribution with a null mean and a standard deviation of $\sigma$.

14. The method according to any one of claims 1 to 8, wherein the updated values of the source parameters ($\Phi$) and the updated values of the environment parameters ($\psi$) are determined as:

$$\operatorname*{argmin}_{\phi \in \mathcal{P}, \psi \in Q} d_n^2(\phi, \psi)$$

with the similarity value being expressed as:

$$d_n^2(\phi, \psi) = \sum_{s \in \mathcal{S}} \sum_{k=1}^{K} |Z_{k,n} - (P_t - A - B \times \log_{10}\|s - L_k\|)|^2$$

where:

- $d_n^2(\phi, \psi)$ is the similarity value,
- $\mathcal{P}$ is a set of candidate values of the source parameters ($\Phi$),
- $Q$ is a set of candidate values of the environment parameters ($\psi$),
- $\mathcal{S}$ is a set of candidate positions of the source entity (2),
- $\phi$ are the source parameters,
- $\psi$ are the environment parameters,
- $s$ is a candidate position value of the source entity (2) among the set of positions $\mathcal{S}$,
- $K$ is the number of receiving entities (3) within the radiofrequency environment (1),
- $Z_{k,n}$ is the data related to current measurements of the radio signals collected by the kth receiving entity (3) among the K receiving entities (3),
- $L_k$ is the current position of the kth receiving entity (3) among the K receiving entities (3),
- $P_t$ is a transmit power of the source entity (2) when emitting the radio signals,
- A and B are path loss parameters of a predefined propagation loss model of the radio signals within the radiofrequency environment (1), said propagation loss model being expressed as:

$$PL = A + B\log_{10}\|s - L_k\|$$

where PL is the propagation loss value of the transmit power of the radio signals emitted by the source entity (2).

15. A computer device (4) configured for characterizing dynamic radio signals in a radiofrequency environment (1), said computer device (4) comprising a connection interface (40) to a receiving entity (3) of the radiofrequency environment and processing circuit (41, 42) to implement the method according to anyone of claims the 1 to 14.

**FIG. 1**

EP 4 529 050 A1

FIG. 2

```
COLL CUR SG VAL                    300
        |
        v
OBT SC PM DT                       310
        |
        v
OBT ENV PM DT                      320
        |
        v
DET PV DT                          330
        |
        v
DET UPD PM VAL                     340
        |
        v
EXPL UPD PM VAL                    350
```

FIG. 3

Europäisches
Patentamt

European
Patent Office

Office européen
des brevets

# EUROPEAN SEARCH REPORT

Application Number

EP 23 30 6562

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | GB 2 583 073 A (UNIV DUBLIN TECHNOLOGICAL [IE]) 21 October 2020 (2020-10-21) * the whole document * | 1-15 | INV. H04B17/26 G01S5/02 H04B17/373 |
| X | LOGOTHETIS C C ET AL: "Joint Channel and Velocity Estimation", NETWORKING, SENSING AND CONTROL, 2007 IEEE INTERNATIONAL CONFERENCE ON, IEEE, PI, 1 April 2007 (2007-04-01), pages 781-786, XP031178410, ISBN: 978-1-4244-1075-0 * section II * | 1-15 | H04B17/391 |

TECHNICAL FIELDS
SEARCHED      (IPC)

H04B
G01S

The present search report has been drawn up for all claims

| Place of search | Date of completion of the search | Examiner |
|---|---|---|
| The Hague | 6 March 2024 | Tejera, Pedro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

EP 4 529 050 A1

## ANNEX TO THE EUROPEAN SEARCH REPORT
## ON EUROPEAN PATENT APPLICATION NO.

EP 23 30 6562

06-03-2024

| Patent document cited in search report | Publication date | Patent family member(s) | Publication date |
|---|---|---|---|
| GB 2583073 A | 21-10-2020 | NONE | |

For more details about this annex : see Official Journal of the European Patent Office, No. 12/82

26